# EUROPEAN PATENT SPECIFICATION

(11) **EP 0 478 316 B1**
(45) Date of publication and mention of the grant of the patent: **20.04.1994**
(21) Application number: 91308761.5
(22) Date of filing: 25.09.1991
(51) Int. Cl.: A23L 3/375, F25D 3/12

(54) **Method and apparatus for treating food and other products with carbon dioxide snow**
Verfahren und Vorrichtung zur Behandlung von Nahrungsmitteln und anderen Produkten mit Kohlensäureschnee
Procédé et dispositif pour le traitement de produits alimentaires et autres produits avec de la neige carbonique

(30) Priority: 28.09.1990 GB 9021234
(43) Date of publication of application: 01.04.1992
(73) Proprietor: The BOC Group plc, Windlesham Surrey GU20 6HJ (GB)
(72) Inventor: Date, Stephen James, Wimbledon, SW19 5LP (GB)
(74) Representative: Wickham, Michael

(56) References cited:
- EP-A- 0 080 313
- EP-A- 0 412 927
- US-A- 3 815 377
- US-A- 4 015 440
- US-A- 4 381 649
- US-A- 4 444 023

## Description

This invention relates to the treatment of food and other products.

It is commonplace in the food processing and other industries to make products which comprise a number of different substances. One of a host of examples is a food product in which a pastry case is provided with a filling of one liquid or semi-liquid food product, and another liquid or semi-liquid food product is applied to the surface of the first one. The first liquid or semi-liquid food product is applied to the pastry case in a flowable state. If the second product is then immediately deposited on the surface of the first one, the two substances would tend to intermingle and thus detract from the aesthetic appearance of the finished article. It is therefore desirable to set the first product before applying the second one. It is known to conduct such a setting operation by advancing the food articles through a tunnel into which liquid nitrogen or liquid carbon dioxide is sprayed. Such a procedure is disadvantageous for two reasons. First, it adds to the length of the food processing production line, or may even require the articles to be taken off one line, passed through the tunnel, and then returned to another line. Second, the use of a tunnel into which liquid nitrogen or liquid carbon dioxide is sprayed tends to result in unnecessary consumption of the liquid nitrogen or liquid carbon dioxide in chilling or freezing parts of the article that do not need to be so treated.

In US patent specification 4 145 894, there is disclosed apparatus for dispensing carbon dioxide snow on an article comprising, in combination, an insulated storage container for carbon dioxide snow; a set of coiled heat transfer pipes within said container for passage of liquid carbon dioxide; a nozzle for dispensing the liquid carbon dioxide in the form of carbon dioxide snow and for directing the snow onto the pipes so as to cool the pipes, a dispenser at the lowermost part of the container for discharging stored snow, and an outlet for gaseous carbon dioxide in the uppermost part of said container. According to US patent specification 4 145 894 the apparatus may be used for chilling perishable goods such as freshly slaughtered poultry packed in shipping cartons. The insulated storage container includes a rotary drum having brush blades which in operation sling snow onto the article to be chilled through an elongate opening. Since the opening is unrestricted it is difficult to control the deposition of the solid carbon dioxide and a relatively uneven and thick deposit of solid carbon dioxide will be produced. Although such a deposit is suitable for the chilling of poultry, it will be unsuitable for food processing operations including an intermediate setting stage, since first generally it is necessary only to set the surface of the first liquid or semi-liquid food product before applying the other one to the surface. Second, the layer of carbon dioxide snow will take a considerable time fully to sublime and therefore it will be necessary to hold the articles before they can be passed onto the next processing step.

It is an aim of the present invention to provide a method and apparatus which enables carbon dioxide snow to be deposited on a surface in a readily controllable manner and which is accordingly able to be used to set the surface of a semi-liquid or liquid food product.

According to the present invention there is provided a method of treating the surface of an article, comprising forming carbon dioxide snow, collecting the snow in a dispensing chamber, advancing the article under the dispensing chamber, and depositing snow from the chamber through a partially occluded outlet onto a chosen area of the surface.

The invention also provides apparatus for treating an article, comprising a device for forming carbon dioxide snow, a dispensing chamber for receiving the carbon dioxide snow from the device, said chamber having a partially occluded, shaped, dispensing outlet, and means for urging the carbon dioxide snow through the outlet, whereby in operation carbon dioxide snow can be deposited over a chosen area of the surface.

The method and apparatus according to the invention are able to be used to set the surface of a liquid or semi-liquid food by applying to the surface carbon dioxide snow (typically as a thin layer or a dusting) and allowing the carbon dioxide to sublime and thereby to cause sufficient heat to be extracted from the surface of the food product for it to set.

The method of the invention is preferably performed as an intermediate step in a process for making food products. The next step of the process is typically to apply to the set surface another flowable semi-liquid or liquid substance.

The outlet of the dispensing chamber preferably includes a plate or other member defining one or more apertures each corresponding to a particular surface area over which it is desired to deposit carbon dioxide snow. The of each such aperture is preferably partially occluded by a screen or grid which may comprise a mesh or be perforate, the mesh size or the size of each perforation being such that the carbon dioxide snow does not pass freely therethrough.

Preferably, the dispensing chamber has associated therewith a blade or wiper able to be caused to move over the end or screen so as to urge carbon dioxide snow therethrough. Such an arrangement facilitates good control of the deposition of the carbon dioxide snow. An even deposit over a chosen surface area may typically be achieved by moving the blade across the grid or screen a plurality of times. The speed of the movement and the size of the mesh may be selected in accordance with the desired thickness of deposit. Alternatively, these may be provided means for vibrating the mesh so as to deposit carbon dioxide snow on the said surfaces. In yet another alternative arrangement, the blade may be fixed and the grid or screen may be movable.

The carbon dioxide snow may be formed by known methods and devices. Methods and devices for making carbon dioxide snow are disclosed in US patents 3 932 155, 4 111 362, 4 015 440, 4 444 023 and 4 652 287. These patents disclose the use of a so called snow horn for forming the carbon dioxide snow. We prefer however that the carbon dioxide snow be formed by discharging liquid carbon dioxide under pressure from one or more orifices formed in a pipe or header within the dispensing chamber.

The amount of carbon dioxide snow that is deposited on the surface area to be set is typically just enough to cover that area. For example, up to 20g of carbon dioxide snow may be deposited per 80 cm² of surface area.

The term "liquid or semi-liquid substance" is used herein to encompass emulsions; suspensions; solutions; gels; the liquid phase of substance that are solid or set at ambient temperature but which melt at temperatures not greatly in excess of ambient; pastes; semi-liquid food such as cream, yoghurt, cottage cheese and butter; purees; egg albumen; mixtures of albumen and yoke, and the like.

The method and apparatus according to the present invention will now be described by way of example with reference to the accompanying drawings, in which:
Figure 1 is a schematic view, partly in perspective, of an apparatus according to the invention for depositing carbon dioxide snow on a surface;
Figure 2 shows a first arrangement of blade, screen and former for use in the apparatus shown in Figure 1;
Figure 3 shows an alternative combination of blade, screen and former for use in the apparatus shown in Figure 1;
Figure 4 is a side view of the apparatus shown in Figure 2.

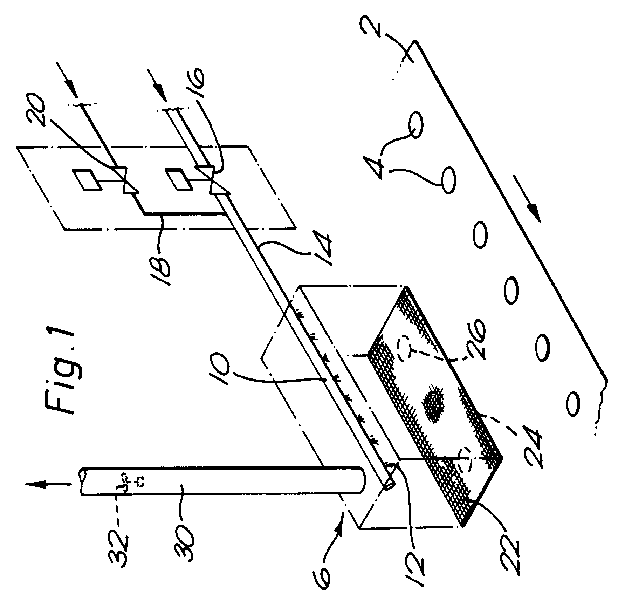

Referring to Figure 1 of the drawings, there is shown a conveyer belt 2 carrying partly made food products 4. The belt 2 is part of a conveyor of a kind which advances the belt a unit distance at a time. The belt 2 extends underneath a dispensing chamber 6 for dispensing carbon dioxide snow. The chamber 6 is of generally cuboid shape. Received in an upper region thereof a generally horizontally extending spray pipe 10 having a plurality of spray orifices 12. The pipe 10 communicates with a source (not shown) of liquid carbon dioxide via a conduit 14 having an automatic on-off valve 16 disposed therein and within a source of gaseous carbon dioxide (not shown) via a conduit 18 having an automatic on-off valve 20 disposed therein. In operation, the liquid carbon dioxide can be caused to undergo a change of state on the release from the pipe 10 through the orifices 12 such that carbon dioxide snow is formed.

The floor of the chamber 6 comprises a screen (or grid) 22 of wire mesh to which is secured to a plate 24 having dispensing apertures 26 disposed therein each of a shape, for example circular, and size corresponding to that of a surface which it is desired to set on the food products 4.

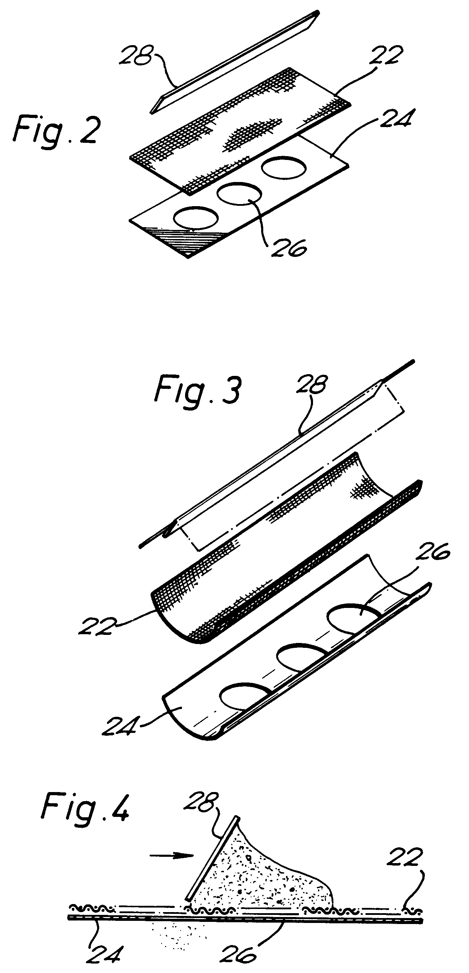

As shown in Figure 2, the screen or grid 22 and the plate 24 may be generally planar. In an alternative embodiment of the apparatus illustrated in Figure 3, the screen or grid 22 and the plate 24 may be of arcuate cross-section (in a plane transverse to the longitudinal axis). The arrangement of the screen 22 and the plate 24 is such that at least some of the particles of carbon dioxide snow are retained on the screen 22 and do not fall straight through it onto the food products 4. As shown in Figure 2 to 4, but omitted from Figure 1 for ease of illustration, a blade or wiper 28 may be reciprocated across the screen or grid 22 so as to urge carbon dioxide snow settling thereupon through the apertures 26 and onto the articles 4 therebeneath. The blade or wiper 28 travels across the surface of the grid or screen 22 in operation of the apparatuses shown in Figures 2 to 4 and urges carbon dioxide snow collecting on the screen 22 across it, and when the particles of snow reach a part of the screen 22 overlying an aperture 26, the snow falls onto the surface of the products 4 therebeneath. Typically, the blade or wiper 28 moves across the surface of the grid or screen 22 several times while the conveyor or belt 2 is in a single position. The thickness of the deposit of carbon dioxide snow is able to be accurately controlled by appropriately selecting the mesh size of the screen 22, the number of times the blade or wiper 28 moves across the screen 22, and the velocity with which the blade or wiper 28 moves. Moreover, a relatively uniform deposit is able to be produced.

The blade or wiper 28 in the apparatuses shown in Figures 2 to 4 may be driven pneumatically, hydraulically or by means of an electric motor (not shown) through a suitable transmission (not shown).

Referring now to Figure 4, it can be seen that the blade or wiper 28 is inclined at an angle to the screen 22 so as to impel the snow particles downwards and hence assist their passage through the apertures 26.

Referring again to Figure 1, the chamber 6 is provided with an exhaust pipe 30 for carbon dioxide gas. A fan 32 may be disposed within the pipe 30 so as to draw carbon dioxide vapour out of the chamber 6. The pipe 30 desirably conducts the carbon dioxide vapour away from any area in which people are working so as to avoid any risk of creating an oxygen-depleted atmosphere in such areas.

In operation, the following sequence of events takes place. First, the belt 2 is advanced so as to bring three partially formed food products 4 which have not previously been treated with solid carbon dioxide into line with the respective apertures 26 in the plate 24. At the same time, the valve 16 is opened and a volume of liquid carbon dioxide is supplied to the pipe 10 at a pressure and temperature such that as the liquid carbon dioxide issues from the orifices 12 so it disassociates into solid carbon dioxide snow and carbon dioxide vapour. The temperature and pressure conditions needed to produce carbon dioxide in the form of snow, that is a relatively fine powder or dust, are well known in the art. Typically, the requisite temperature is in the range -56 to 0°C and the pressure in the range 6 to 21 bar. The solid carbon dioxide is formed falls under gravity and collects on the screen or grid 22. The blade or wiper 28 is then caused to move backwards and forwards across the grid a number of times so as to urge through the apertures 26 those particles of carbon dioxide snow that do not immediately fall therethrough. Each of the three products 4 therefore receives a chosen quantity of carbon dioxide snow. The carbon dioxide vapour that is formed at the same time is exhausted from the chamber 6 by continuous operation of the fan 32.

Once the desired quantity of liquid carbon dioxide has been dispensed through the orifices 12, the valve 16 is closed. When the solid carbon dioxide has been discharged from the dispensing chamber 6, the valve 20 is opened and gaseous carbon dioxide at ambient temperature is passed into the pipe 10 and through the orifices 12 so as to clear any accumulation of solid carbon dioxide in the region of the orifices 12. The belt 4 is then advanced again to bring the next three products 4 underneath the respective apertures 26 of the dispensing chamber 6 and the procedure repeated.

The apparatus shown in the drawings may for example be used to set the surface of a custard or gel within a pastry case to enable a whirl of cream to be applied to the surface in a subsequent processing step without the cream becoming mixed with the gel or custard. Typically from 0 to 20g of carbon dioxide snow are applied per 80 cm² of area to give a thin covering of carbon dioxide snow. The snow then rapidly sublimes to leave a clean, dry and unmarked surface for further operations. Moreover, the heat extracted from the surface as a result of the sublimation leaves the surface stiff or solid so that it does not run during the application to it of another substance, say cream. It will be appreciated that the precise amount of solid carbon dioxide dispensed will be chosen in accordance with the temperature of the surface at the time it is brought under the dispensing chamber 6 and the temperature at which the liquid or semi-liquid substance sets.

A number of modifications and changes may be made to the method and apparatuses described with respect to the accompanying drawings. It is possible for example to make carbon dioxide snow continuously by supplying liquid carbon dioxide continuously to the pipe 10. In such apparatuses, it is desirable for there to be a sensor within the chamber 6 which senses the level of the solid carbon dioxide, and if it exceeds a desired level, will generate a signal effective to close the valve 16 controlling the passage of liquid carbon dioxide to the pipe 10.

## Claims

1. A method of treating the surface of an article, comprising forming carbon dioxide snow, collecting the snow in a dispensing chamber, advancing the article under the dispensing chamber, and depositing carbon dioxide snow from the chamber through a partially occluded outlet onto a chosen area of the surface.

2. A method as claimed in Claim 1, in which the surface is that of a liquid or semi-liquid food, and sublimation of the deposited snow causes the surface to set.

3. A method as claimed in Claim 1 or Claim 2, in which the outlet has a screen or grid which partially occludes the outlet.

4. A method as claimed in Claim 3, in which the screen or grid comprises a mesh or is perforate, the mesh size or the size of each perforation being such that the carbon dioxide snow does not pass freely therethrough.

5. A method as claimed in Claim 3 or Claim 4, in which the outlet of the dispensing chamber includes a plate or other member on which the grid lies and which defines one or more apertures each corresponding to a particular surface area over which it is desired to deposit carbon dioxide snow.

6. A method as claimed in any one of Claims 3 to 5, additionally including the step of moving a blade or wiper relative to the grid or screen so as to urge carbon dioxide snow therethrough.

7. Apparatus for treating an article, comprising a device for forming carbon dioxide snow, a dispensing chamber for receiving the carbon dioxide snow from the device, said chamber having a partially occluded, shaped, dispensing outlet, and means for urging the carbon dioxide snow through the outlet, whereby in operation carbon dioxide snow can be deposited over a chosen area of the surface.

8. Apparatus as claimed in Claim 7, in which the outlet of the dispensing chamber has a screen or grid which partially occludes the outlet.

9. Apparatus as claimed in Claim 8, in which the screen or grid comprises a mesh or is perforate, the mesh size or the size of each perforation being such that the carbon dioxide snow does not pass freely therethrough.

10. Apparatus as claimed in Claim 8 or Claim 9, in which the outlet of the dispensing chamber includes a plate or other member defining one or more apertures each corresponding to a particular surface area over which it is desired to deposit carbon dioxide snow.

11. Apparatus as claimed in Claim 10, in which the grid or screen lies on the plate.

12. Apparatus as claimed in any one of Claims 8 to 11, in which the urging means comprises a blade or wiper able to be moved across the grid or screen.

## Patentansprüche

1. Ein Verfahren zur Behandlung der Oberfläche eines Artikels, das umfaßt, daß Kohlendioxidschnee gebildet wird, der Schnee in einer Ausgabekammer gesammelt wird, der Artikel unter die Ausgabekammer vorgeschoben wird und Kohlendioxidschnee aus der Kammer durch einen teilweise verschlossenen Auslaß auf einem ausgewählten Bereich der Oberfläche deponiert wird.

2. Ein Verfahren nach Anspruch 1, in welchem die Oberfläche die eines flüssigen oder halbflüssigen Nahrungsmittels ist und die Sublimation des deponierten Schnees die Oberfläche dazu veranlaßt, zu härten.

3. Ein Verfahren nach Anspruch 1 oder Anspruch 2, in welchem der Auslaß einen Schirm oder ein Gitter hat, welcher oder welches den Auslaß teilweise verschließt.

4. Ein Verfahren nach Anspruch 3, in welchem der Schirm oder das Gitter ein Geflecht umfaßt oder perforiert ist, wobei die Geflechtgröße oder die Größe von jeder Perforierung so ist, daß der Kohlendioxidschnee nicht ohne weiteres dort hindurchtritt.

5. Ein Verfahren nach Anspruch 3 oder Anspruch 4, in welchem der Auslaß der Ausgabekammer eine Platte oder ein anderes Glied umfaßt, auf welcher oder welchem das Gitter liegt und welche oder welches eine oder mehrere Öffnungen festlegt, die jeder einem speziellen Oberflächenbereich entsprechen, über welchem es gewünscht ist, Kohlendioxidschnee zu deponieren.

6. Ein Verfahren nach einem der Ansprüche 3 bis 5, das zusätzlich den Schritt umfaßt, daß ein Flügel oder Wischer relativ zu dem Gitter oder dem Schirm bewegt wird, um so Kohlendioxidschnee dort hindurch zu drängen.

7. Eine Vorrichtung zur Behandlung eines Artikels, die umfaßt: ein Gerät zur Bilden von Kohlendioxidschnee, eine Ausgabekammer zum Empfangen des Kohlendioxidschnees aus dem Gerät, wobei die Kammer einen partiell verschlossenen, geformten, Ausgabe-Auslaß und Mittel zum Drücken des Kohlendioxidschnees durch den Auslaß hat, wodurch im Betrieb Kohlendioxidschnee über einem ausgewählten Bereich der Oberfläche deponiert werden kann.

8. Vorrichtung nach Anspruch 7, in welchem der Auslaß der Ausgabekammer einen Schirm oder ein Gitter hat, welcher oder welches den Auslaß teilweise verschließt.

9. Vorrichtung nach Anspruch 8, in welchem der Schirm oder das Gitter ein Geflecht umfaßt oder perforiert ist, wobei die Geflechtgröße oder die Größe von jeder Perforierung so ist, daß der Kohlendioxidschnee nicht frei dort hindurchtritt.

10. Vorrichtung nach Anspruch 8 oder 9, in welcher der Auslaß der Ausgabekammer eine Platte oder ein anderes Glied umfaßt, die oder das eine oder mehrere Öffnungen festlegt, die jede einem speziellen Oberflächenbereich entsprechen, über welchem es gewünscht ist, Kohlendioxidschnee zu deponieren.

11. Vorrichtung nach Anspruch 10, in welchem der Schirm oder das Gitter auf der Platte liegt.

12. Vorrichtung nach einem der Ansprüche 8 bis 11, in welchem das drängende Mittel einen Flügel oder einen Wischer umfaßt, der fähig ist, über das Gitter oder den Schirm bewegt zu werden.

## Revendications

1. Procédé de traitement de la surface d'un article, comprenant la formation de neige carbonique, la collecte de la neige dans une chambre distributrice, le déplacement d'avance de l'article sous la chambre distributrice, et le dépôt de la neige carbonique, depuis la chambre et à travers une sortie partiellement obturée, sur une zone choisie de la surface.

2. Procédé tel que revendiqué à la revendication 1, dans lequel la surface est celle d'un aliment liquide ou semi-liquide, et la sublimation de la neige déposée provoque la prise de durcissement de la surface.

3. Procédé tel que revendiqué à la revendication 1 ou 2, dans lequel la sortie comporte une toile ou grille qui ferme en occlusion partielle la sortie.

4. Procédé tel que revendiqué à la revendication 3, dans lequel la toile ou grille comprend une toile de tamis ou est perforée, la dimension de maille ou la taille de chaque perforation étant telle que la neige carbonique ne passe pas librement à travers.

5. Procédé tel que revendiqué à la revendication 3 ou à la revendication 4, dans lequel la sortie de la chambre distributrice comprend une plaque ou un autre élément sur lequel la grille repose et qui délimite une ou plusieurs ouvertures dont chacune correspond à une aire particulière de la surface sur laquelle on désire provoquer le dépôt de la neige carbonique.

6. Procédé tel que revendiqué dans l'une quelconque des revendications 3 à 5, comprenant en outre l'étape consistant à déplacer une lame ou une raclette par rapport à la grille ou à la toile, de façon à provoquer le passage de la neige carbonique à travers cette grille ou toile.

7. Appareil pour traiter un article, comprenant un dispositif pour former de la neige carbonique, une chambre distributrice pour recevoir la neige carbonique provenant du dispositif, ladite chambre ayant une sortie distributrice configurée et partiellement obturée, et un moyen pour pousser la neige carbonique et lui faire traverser la sortie, de sorte qu'en service la neige carbonique peut être déposée sur une zone ou aire choisie de la surface.

8. Appareil tel que revendiqué à la revendication 7, dans lequel la sortie de la chambre distributrice comporte une toile ou grille qui obture partiellement la sortie.

9. Appareil tel que revendiqué à la revendication 8, dans lequel la toile ou grille comprend une toile de tamis ou est perforée, l'ouverture des mailles ou la taille de chaque perforation étant telle que la neige carbonique ne passe pas librement à travers.

10. Appareil tel que revendiqué à la revendication 8 ou à la revendication 9, dans lequel la sortie de la chambre distributrice comprend une plaque ou un autre élément délimitant une ou plusieurs ouvertures, dont chacune correspond à une zone ou aire particulière de surface sur laquelle on souhaite provoquer le dépôt de la neige carbonique.

11. Appareil tel que revendiqué à la revendication 10, dans lequel la grille ou toile repose sur la plaque.

12. Appareil tel que revendiqué dans l'une quelconque des revendications 8 à 11, dans lequel le moyen de poussée est ou comprend une lame ou une raclette pouvant être déplacée sur la grille ou sur la toile.
